# EUROPÄISCHE PATENTSCHRIFT

(11) **EP 1 063 446 B1**
(45) Veröffentlichungstag und Bekanntmachung des Hinweises auf die Patenterteilung: **13.10.2004**
(21) Anmeldenummer: 00250189.8
(22) Anmeldetag: 20.06.2000
(51) Int. Cl.: F16F 9/04

(54) **Luftdämpfer**
Air damper
Amortisseur à air

(30) Priorität: 25.06.1999 DE 19929303
(43) Veröffentlichungstag der Anmeldung: 27.12.2000
(73) Patentinhaber: WOCO Industrietechnik GmbH, 63628 Bad Soden-Salmünster (DE)
(72) Erfinder: Wolf, Franz-Josef, 63628 Bad Soden-Salmünster (DE)
(74) Vertreter: Weber-Bruls, Dorothée, Dr.

(56) Entgegenhaltungen:
- EP-A- 0 123 171
- EP-A- 0 164 543
- DE-A- 4 335 430
- DE-C- 481 648
- FR-A- 2 065 191
- FR-A- 2 475 172
- GB-A- 2 131 517
- PATENT ABSTRACTS OF JAPAN vol. 012, no. 160 (M-697), 14. Mai 1988 (1988-05-14) & JP 62 278332 A (EE S:KK), 3. Dezember 1987 (1987-12-03)
- PATENT ABSTRACTS OF JAPAN vol. 006, no. 045 (M-118), 20. März 1982 (1982-03-20) & JP 56 160219 A (NISSAN MOTOR CO LTD), 9. Dezember 1981 (1981-12-09)

## Beschreibung

Die Erfindung betrifft einen mit Luft arbeitenden Dämpfer, insbesondere für Kraftfahrzeug-Aggregatlager.

Gegenstand der vorliegenden Anmeldung ist ein Dämpfer, also ein Bauelement, das kinetische Energie, zumeist Stoßenergie, aufnimmt, im Idealfall vollständig aufnimmt, und die aufgenommene Energie dissipiert oder absorbiert, ohne sie an den bedämpften Körper zurückzugeben. Ein auf einen Dämpfer fallender Körper wird also durch den Dämpfer abgebremst und bleibt nach dem dynamischen Bremsvorgang auf einem neuen Potential statischer Energie liegen.

Eine Feder ist dagegen ein Bauelement, das von einem abgefederten Körper eingeleitete kinetische Energie aufnimmt, zwischenspeichert und unmittelbar anschließend mit umgekehrtem Richtungsvektor auf den abzufedernden Körper zurücküberträgt, und zwar im Idealfall vollständig zurücküberträgt. Der abgefederte Körper kehrt also im Idealfall auf sein hochgelegenes Niveau an potentieller Energie zurück, aus dem er auf die Feder gefallen ist oder in anderer Weise auf diese eingewirkt hat.

Für eine herabfallende Stahlkugel ist also ein Block aus weicher plastischer Masse, beispielsweise ein Block Butter, ein nahezu idealer Dämpfer. Läßt man die Stahlkugel dagegen unter gleichen Bedingungen auf eine Stahlplatte fallen, so verformt sich die Stahlplatte (im hoökschen Bereich) und wird die Kugel durch die Rückstellkraft des Stahls auf ihre Ausgangshöhe zurückgeschleudert.

In der physikalischen Realität sind ideale Dämpfer ebensowenig wie ideale Federn zu verwirklichen; auch der beste reale Dämpfer prägt einem zu dämpfenden Gegenstand aufgrund seiner Relaxationskräfte Komponenten kinetischer Umkehrenergie auf, während auch die beste Feder dem dynamisch einwirkenden Körper dissipativ Verformungsarbeit entzieht. Jeder Dämpfer wirkt also auch in geringem oder geringstem Ausmaß als Feder, während auch die beste Feder notwendigerweise dämpft. Ein realer Dämpfer ist also ein Bauteil, das einem zu bedämpfenden Körper zumindest den größten Teil seiner kinetischen Energie entzieht, ohne dabei den Vektor seiner kinetischen Energie signifikant umzukehren. Eine reale Feder ist dem entsprechend ein Bauelement, das einen mit dynamischer Energie einwirkenden Körper nur nahezu auf sein anfängliches Potential an statischer Energie zurückbefördert und sich dieser Vorgang von Schwingung zu Schwingung wiederholt, bis der abzufedernde Körper auf einem neuen statischen Potential zur Ruhe kommt, das heißt, alle seine kinetische Energie verloren hat.

Im Rahmen der Beschreibung der vorliegenden Erfindung ist für solche "realen" Dämpfer und "realen" Federn kurz die Bezeichnung "Dämpfer" bzw. "Feder" verwendet, obwohl jeder Dämpfer auch federt, während jede Feder auch dämpft.

Dämpfer und Federn der vorstehend präzisierten Art sind jedoch deutlich von solchen kombinierten Bauelementen zu unterscheiden, die zielgerichtet sowohl federn als auch dämpfen sollen. Bei diesen Bauelementen handelt es sich regelmäßig um kombinierte Bauelemente, die einerseits aus federnden und andererseits aus dämpfenden Baugruppen zusammengesetzt sind. Solche kombinierten Baugruppen sind im folgenden, der gebräuchlichen Terminologie folgend, als "Lager" bezeichnet. Ein typisches Beispiel für solche Lager sind die im Kraftfahrzeugbau als Motorlager verwendeten Hydrolager, die typischerweise aus einer Gummifeder bestehen, die beim Einfedern eine Dämpfungsflüssigkeit über eine Drosselöffnung aus einer Vorratskammer herauspumpt, wobei dem federnden Schwingungsvorgang dissipativ dämpfend die Strömungsverluste der durch die Drossel gezwungenen hydraulischen Dämpferflüssigkeit dämpfend entzogen werden.

In diesem wohlverstandenen Sinne betrifft die vorliegende Erfindung also einen Dämpfer, und zwar einen Dämpfer, der wie die Dämpfer der vorstehend erwähnten Hydrolager mit einem Fluid als Dämpfungsmedium arbeitet, jedoch im Gegensatz zum Hydrolager nicht mit einer Dämpfungsflüssigkeit, sondern mit einem Gas, hier speziell mit Luft. Solche Luftdämpfer sind in größerer Zahl bekannt und zumeist als Tauchkolbendämpfer ausgebildet. Ein von einer dynamisch beaufschlagten und in ihrem Kenndatenfeld zu dämpfenden Feder angetriebener starrer Tauchkolben wird in einem Zylinder oder in einem zylinderartigen starren Gefäß nach Art eines Pumpenkolbens so hin und herbewegt, daß sich die Volumina oberhalb und unterhalb des Tauchkolbens befindlicher und mit Luft gefüllter Kammern ständig verändern. Ein typisches Beispiel ist das aus der deutschen Offenlegungsschrift DE 35 05 632 A1 bekannte Motorlager, bei dem die Schwingungen eines auf einer Gummifeder gelagerten Kraftfahrzeugmotors durch die Reibungsverluste eines Luftstromes gedämpft werden, der durch einen Tauchkolben bei größeren Amplituden zwischen zwei Teilkammern hin und hergepumpt wird. Dabei sind die Kammerwände, die aus elastischem Material bestehen, so konfiguriert, daß sich je nach dynamischem Geschehen in den beiden luftgefüllten Teilkammern der Querschnitt des Ringspalts zwischen Kammerinnenwand und Tauchkolbenaußenrand verändert. Obwohl dieser Luftdämpfer durch die Kompressibilität der Luft und die Elastizität der Kammerwand auf die Lagerkenndaten auch mit Federkomponenten einwirkt, so spielen diese Einflüsse auf die im wesentlichen durch die Gummifeder definierten Federkenndaten des Lagers praktisch keine Rolle. Das aus der deutschen Offenlegungsschrift DE 35 05 632 A1 bekannte Motorlager ist dem entsprechend als Kombination einer Gummifeder mit einem Luftdämpfer anzusehen.

Problematisch bei diesem Lager ist dessen Bauhöhe. Der Luftdämpfer erfordert eine Bauhöhe, die größer ist als die Bauhöhe der gesamten Tragfeder.

Ein scheinbar ähnliches, funktionell von dem vorstehend erläuterten Stand der Technik jedoch grundverschiedenes Motorlager ist aus der amerikanischen Patentschrift US 5 087 020 A1 bekannt. Auf einem Widerlagerblech steht eine Gummifeder, die als eigentliche Tragfeder die Masse des zu lagernden Motors federnd abstützt. Dieses Abstützen erfolgt über eine Auflageranschlußplatte auf der oberen, lastaufnehmenden Seite der Gummifeder des bekannten Motorlagers. Mit der Auflageranschlußplatte ist eine Hülse oder ein Bolzen verbunden, der eine zentrale Bohrung der Gummifeder und eine zentrale Bohrung des Widerlagerblechs frei durchsetzt. Diese Hülse trägt an ihrem Fußende unterhalb der Widerlagerplatte einen scheibnförmigen Querträger, der auf seinen beiden Hauptoberflächen in luftdichter und druckfester Verbindung peripher umlaufende ringförmige Luftkammern trägt. Diese Querträgerscheibe ist innerhalb der ringförmigen Luftkammern mit einer oder mehreren durchgehenden Drosselöffnungen versehen, die die oberhalb und unterhalb der Scheibe liegenden Luftkammern miteinander kommunizieren läßt. Diese aus der Querträgerscheibe und den beiden Luftkammern bestehende Anordnung ist unter mäßiger Vorspannung der Luftkammern in einer käfigartigen Stahlblechkammer eingeschlossen, die in festem Verbund zum Widerlageranschlußblech steht.

Bei dynamischer Beaufschlagung dieses Motorlagers wird einmal die obere Luftkammer zwischen der Oberseite der Querträgerscheibe und der Unterseite des Widerlageranschlußblechs komprimiert, während die darunterliegende ringförmige Kammer entspannt wird, wobei beim Rückschwingen des Motors die untere ringförmige Luftkammer zwischen der Unterseite der Querträgerscheibe und dem Boden des Käfigblechs zusammengedrückt wird, wobei sich die darüberliegende obere ringförmige Luftkammer entspannt. Gleichzeitig sind beide der Ringluftkammern mit Rückschlagventilen ausgerüstet, die so ausgelegt sind, daß sie beim Entspannen der ringförmigen Luftkammer einen Eintritt von Umgebungsluft in die Kammer ermöglichen, während sie bei Kompression der Ringkammer einen Austritt der Luft in die Umgebung hinein verhindern. Die in der solcherart komprimierten und verschlossenen ringförmigen Luftkammer eingeschlossene Luft entweicht dann durch die Drosselöffnungen in der Querträgerscheibe in die obere Luftkammer und bewirkt so eine signifikante Dämpfung des Motorlagers. Gleichzeitig wirkt dabei jedoch die jeweils komprimierte ringförmige Luftkammer aufgrund der Verformbarkeit der Kammerwände als zusätzliche Druckluftfeder nach Art eines pneumatischen Autoreifens oder Fahrradreifens.

Die aus der amerikanischen Patentschrift US 5 087 020 A1 bekannte Lageranordnung besteht also in serieller Kombination aus einer Gummifeder nach Art eines Gummipuffers mit einem Sublager aus einer über Drosselöffnungen gedämpften Druckluftfeder.

Selbst wenn man von diesem pneumatischen Lagersubsystem einmal nur die Luftdämpferanordnung berücksichtigt, so weist auch diese Vorrichtung ebenso wie im Fall der vorstehend beschriebenen Tauchkolbenanordnung den wesentlichen Nachteil zu großer Bauhöhe auf. Lager dieser Art sind in den gedrängten Motorräumen zeitgemäßer Kraftfahrzeuge nicht mehr unterzubringen.

Andererseits ist ein Luftdämpfer gegenüber dem heute gebräuchlichen hydraulischen Dämpfer allein aus umwelttechnischen Gründen die fraglos vorzuziehende Alternative.

Die EP 0 164 543 offenbart als nächstliegender Stand der Technik einen Luftdämpfer mit einer Kammer, die durch plattenförmige Abschnitte eines Lagerkerns und eines Widerlagers sowie durch membranartige Seitenwände begrenzt ist. Die Kammer ist über eine Leitung mit einer Drossel in einem Steuerglied verbunden. Außerdem ist die Kammer an ihrer Ober- und Unterseite durch Gummiblöcke begrenzt.

Die JP 56160219 offenbart eine Luftfeder mit zwei Gehäuseschalen, zwischen denen zumindest eine Kammer angeordnet ist. Die Kammer ist außerdem durch einen balgartigen Elastomerkörper begrenzt.

Die DE 48 16 48 offenbart einen Luftstoßdämpfer mit zwei Platten, zwischen denen ein Faltbalg zur Begrenzung einer Kammer angeordnet ist. Die Kammer ist durch Bohrungen pneumatisch geöffnet.

Der Erfindung liegt daher das technische Problem zugrunde, einen Luftdämpfer zu schaffen, der bei minimaler Bauhöhe in der Lage ist, der Tragfeder eines Lagers, insbesondere Kraftfahrzeugmotorlagers, eine Dämpfung aufzuprägen, die ebenso flexibel einstellbar und wirksam ist wie die durch heute gebräuchliche hydraulische Systeme erzeugten Dämpfungsmöglichkeiten.

Dieses Problem löst die Erfindung durch einen Lufdämpfer, der die im Patentanspruch 1 genannten Merkmale aufweist.

Dem entsprechend ist der Luftdämpfer mit den Lösungsmerkmalen der Erfindung unter an derem wesentlich durch zwei planparallel zueinander ausgerichtete und gehalterte Platten gekennzeichnet. Selbst wenn eine strenge Flächenkonkurrenz der beiden Dämpferplatten zueinander nicht zwingend erforderlich ist, so ist es von Vorteil, wenn die beiden mit zumindest weitgehend gleicher Kontur konfigurierten Dämpferplatten auch zumindest größenordnungsmäßig gleichen Flächeninhalt aufweisen. Aus praktischen und konstruktiven Überlegungen kann eine der beiden Dämpferplatten bei identischer Kontur zur anderen Dämpferplatte mit geringem Untermaß zur anderen dimensioniert sein. Dieses "geringe Untermaß" liegt dabei vorzugsweise im Bereich von gleichmäßig 10 bis 20 % der linearen Ausdehnung der jeweils anderen Dämpferplatte. Die solcherart ausgestalteten Dämpferplatten werden vorzugsweise konzentrisch oder zentrosymmetrisch zueinander ausgerichtet und gehaltert.

Die beiden Dämpferplatten sind durch eine flexible Membran relativ zueinander abstandsvariabel und beweglich gehaltert. Diese Membran kann geschlossen rings um beide Dämpferplatten umlaufend ausgebildet und mit beiden Dämpferplatten gasdicht und druckfest verbunden sein. Zwischen den beiden Dämpferplatten und der umlaufenden Membran ist eine pneumatische Dämpfer - und Resonanzkammer definert und vorzugsweise als Resonanzkammer im Bereich des wichtigsten zu bedämpfenden Frequenzbandes abgestimmt.

Die Membran ist vorzugsweise so ausgebildet, daß sie einerseits eine ausreichend hohe federnde Rückstellkraft besitzt, um die beiden Dämpferplatten im unbelasteten statischen Zustand in definierter relativer Stellung zueinander zu halten, andererseits aber auch eine Beaufschlagung der Dämpferplatten mit den zu dämpfenden dynamischen Kräften ermöglicht. Die Membran kann also als Balgfeder bezeichnet werden, die eine Federrate aufweist, die so gering ist, daß sie sich in der Kennlinie der mit einem Dämpfer gemäß der Erfindung verbundenen Tragfeder nicht mehr bemerkbar macht. Insbesondere dann, wenn beide Dämpferplatten an anderen Bauteilen fixiert sind, kann die Membran sogar auch ohne jegliche Elastizität lediglich mit ausreichender Flexibilität, insbesondere als druckdichte flexible Gewebemembran, konfiguriert sein.

Vorzugsweise ist die Membran jedoch eine dünne Gummimembran, die nach Art einer sogenannten Rollmembran konfiguriert ist, wie sie in pneumatischen Kleinantrieben Verwendung finden. Dies gewährleistet eine leichte Verschiebbarkeit der beiden Platten relativ zueinander in Richtung ihrer Normalen unter gleichzeitig hinreichender elastischer Querstabilisierung.

Bei diesem Aufbau des Dämpfers weist zumindest eine der beiden einander gegenüberliegenden Dämpferplatten eine durchgehende Bohrung auf, die als die Dämpferkammer belüftende Dämpferdrossel dient. Es versteht sich von selbst, daß statt einer einzelnen Bohrung auch mehrere Bohrungen oder speziell konfigurierte und dimensionierte Schlitze oder Kanäle in einer der beiden Dämpferplatten oder aber auch in beiden Dämpferplatten koordiniert zueinander angeordnet sein können.

Bei Verwendung einer Gummimembran zur Positionierung der beiden Dämpferplatten relativ zueinander ist diese Gummimembran vorzugsweise mit einer der beiden Anschlußplatten fest verbunden, vorzugsweise durch ein Anvulkanisieren der Membran an der Platte, während die so vorgefertigte Baugruppe an der anderen Dämpferplatte, der Gegenplatte, unter Vorspannung mechanisch fixiert ist.

Grundsätzlich kann die Leistung eines solcherart aufgebauten Luftdämpfers durch eine Vergrößerung der Plattenflächen, also eine Vergrößerung sowohl der Membranplatte, an der die Kammermembran befestigt ist, als auch der Gegenplatte, auf die die Membran montiert ist, erreicht werden. Wo aus konstruktiver Vorgabe einer solchen Vergrößerung der Dämpferplattenoberflächen jedoch Grenzen gesetzt sind, kann der Dämpfer auch als Duosystem ausgebildet sein, und zwar dergestalt, daß eine ortsfest montierte Gegenplatte zu beiden Seiten ihrer Hauptebene mit jeweils einer Membranplatte und einer Dämpferkammer konfiguriert ist. Ein beispielsweise mit einer Tragfeder verbundener Bolzen durchgreift abgedichtet eine zentrale Öffnung in der Gegenplatte und verbindet die beiden einander zu beiden Seiten der Gegenplatte gegenüberliegenden Membranplatten zu einer starren, von der zu dämpfenden Tragfeder simultan beaufschlagten Einheit. Die so zu beiden Seiten der Gegenplatte gebildeten Dämpferkammern können entweder unabhängig voneinander mit Drosselbohrungen versehen sein, oder durch eine durch die Gegenplatte hindurchgehende Bohrung miteinander verbunden sein oder aber auch sowohl mit einer Außenbelüftung als auch mit einer Kammerkopplung ausgestattet sein.

Wenn für die solcherart aufgebauten Dämpfer Feinabstimmungen vorzunehmen sind, die durch eine einfache Außenbelüftung der Dämpferkammern nicht mehr zu verwirklichen sind, können die vorstehend beschriebenen Duosysteme auch dahin erweitert werden, daß statt einer flexiblen Dämpfergegenkammer eine starre Gegenkammer vorgesehen ist, die dann, beispielsweise auch nach Art eines Helmholzresonators, die Dämpferkennlinie mitgestaltet. Gleicherweise kann eine durch die Membranplatte geführte Drossel- und Belüftungsbohrung einer flexiblen Dämpferkammer nach außen hin in eine zweite flexible Kammer ohne starre Membranplatte münden. Durch solche Abstimmungsmöglichkeiten lassen sich effektive Dämpfungen über breite Frequenzbänder hin verwirklichen.

Auch durch eine geregelte oder gesteuerte Druckluftbeaufschlagung der Dämpferkammern läßt sich das Kennlinienfeld des Luftdämpfers mit den Merkmalen der Erfindung gestalten.

Mit den Dämpfern der Erfindung lassen sich bereits bei Durchmessern von weniger als 100 mm Verlustleistungen im Bereich von 500 - 700 N erzielen, wobei die Aggregateinsinkwege im Bereich um 2mm liegen, während bei vergleichbaren klassischen Hydrolagern Aggregatwege im Bereich von 6 - 8 mm bei einer um 20% bis 40% grösseren Bauhöhe des Lagers in Kauf genommen werden müssen.

Im einzelnen sind Ausgestaltungen der Erfindung auch Gegenstand der Unteransprüche.

Das Wesen der Erfindung ist im folgenden anhand von Ausführungsbeispielen in Verbindung mit den Zeichnungen näher erläutert. Es zeigen:
- Fig. 1: im Axialschnitt ein erstes Ausführungsbeispiel des Luftdämpfers mit den Merkmalen der Erfindung in Grundkonfiguration;
- Fig. 2: ein zweites Ausführungsbeispiel des Luftdämpfers mit Druckluftbeaufschlagung und zusätzlicher Außenkammer;
- Fig. 3: ebenfalls im Axialschnitt ein drittes Ausführungsbeispiel der Erfindung mit Druckluftbeaufschlagung und zweiter starrer Dämpferresonanzkammer;
- Fig. 4: ein viertes Ausführungsbeispiel des Luftdämpfers mit dem Aufbau als Duosystem; und
- Fig. 5: ein fünftes Ausführungsbeispiel des Luftdämpfers mit einem Grundaufbau des in Fig. 4 gezeigten Ausführungsbeispiels, jedoch mit einem Drosselkanal, der beide Dämpferkammern unmittelbar miteinander koppelt.

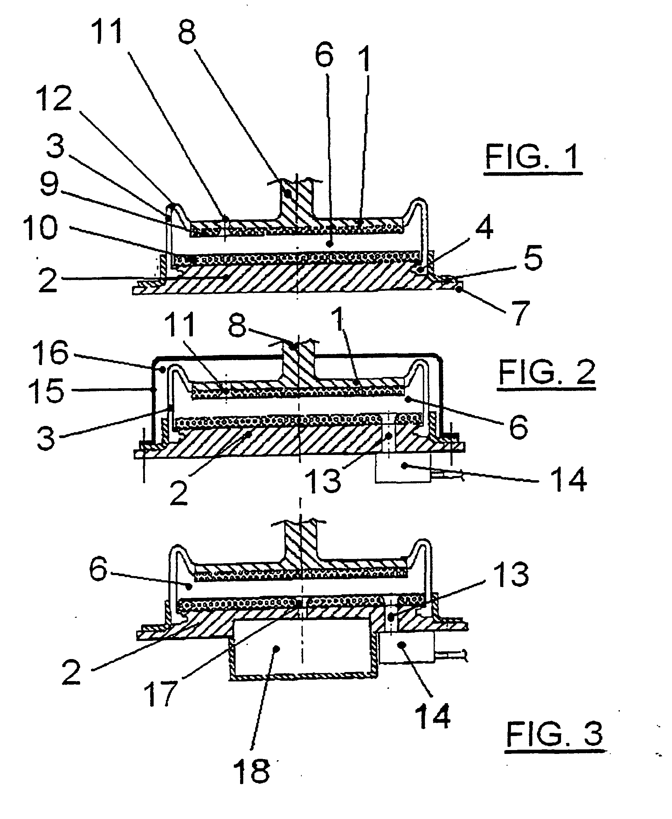

Der in Fig. 1 im Axialschnitt dargestellte Luftdämpfer für ein Kraftfahrzeugaggregatlager besteht aus zwei kreisrunden Dämpferplatten, namlich aus einer im Durchmesser kleineren Membranplatte 1 und einer Gegenplatte 2, sowie einer Membran 3, die die beiden Dämpferplatten 1,2 planparallel zueinander ausgerichtet und relativ zueinander abstandsvariabel beweglich hält. Die Membran 3 ist unter Bildung einer Gummi-Metall-Verbindung an die Membranplatte 1 anvulkanisiert. An der Gegenplatte 2 ist die Membran 3 unter leichter radialer Vorspannung durch eine ringförmige Hinterschnittverbindung 4 befestigt, die durch einen verriegelnden Flanschring 5 gesichert ist. Zwischen den beiden Dämpferplatten 1,2 und der Membran 3 ist luftdicht und druckfest eine Dämpferkammer 6 definiert. Die Gegenplatte 2 ist mit einem Außenflansch 7 an einem hier nicht dargestellten Bezugsträger fixiert. Dieser Bezugsträger kann beispielsweise das Widerlagerblech eines Motorlagers, eine Montagekonsole oder gegebenenfalls auch ein Träger sein, der unmittelbar an der Fahrzeugkarosserie fixiert oder Teil dieser ist.

An der Membranplatte 1 ist zentralaxial ein Koppelbolzen 8 ausgebildet, der direkt mit der Tragfeder oder über ein Auflagerblech mit dieser verbunden ist.

Zur Dämpfung der über eine hier nicht dargestellte Tragfeder angekoppelten dynamischen Last eines Personenkraftfahrzeugaggregats weist die Dämpferkammer einen Durchmesser von 80 mm auf und ist die Membranplatte im unbelasteten neutralen Zustand in einem Abstand von 2 bis 5 mm zur Oberfläche der Gegenplatte gehaltert. Der in der Fig. 1 dargestellte Dämpfer ist also für maximale Amplituden im Normalbetrieb von 2 bis 5 mm ausgelegt. Um bei dieser Normalauslegung auch größere Stoßamplituden dynamisch weich dämpfen zu können, sind die beiden in der Dämpferkammer 6 einander planparallel gegenüberliegenden Oberflächen der beiden Dämpferplatten 1,2 vollflächig mit einer Schicht 9 bzw. 10 aus einem Schaumstoff mit geschlossenen Poren beschichtet. Auf diese Weise werden selbst Amplituden, die den Freischwingbereich der Membranplatte überschreiten, wirksam gedämpft. Der Dampfer der Erfindung ist also in der Lage, den klassischen Zielkonflikt einer gleichzeitigen guten Dämpfung von kleinen und grossen Amplituden aufzuheben.

In der beschichteten Membranplatte 1,9 ist eine beidseitig offene durchgehende Bohrung 11 ausgebildet, die der drosselnden, das heißt dämpfenden Entlüftung und Belüftung der Drosselkammer 6 dient. Durch eine abstimmende Dimensionierung und Konfigurierung der Drosselöffnung 11 kann die Eigenresonanz der Dämpferkammer nach Maßgabe des jeweils wichtigsten zu bedämpfenden Störfrequenzbandes eingestellt werden.

Die in Fig. 1 dargestellte Vorrichtung ist, wie eingangs ausführlich erläutert, ein Dämpfer. Dies bedeutet, daß auftretende Federkomponenten so klein wie möglich gehalten werden sollen, um das Federkennlinienfeld einer beispielsweise an den Dämpfer angekoppelten Tragfeder nicht, zumindest nur so wenig wie möglich, zu verändern. In diesem Sinne weist der in Fig. 1 gezeigte Dämpfer zwei Komponenten auf, die systemimanent federnd wirken, nämlich die aufgabengemäße Verwendung kompressibler Luft als Dämpfungsfluid und der Einsatz eines Elastomers als Werkstoff für die Membran 3. Dabei erfolgt die Verwendung von Luft wegen der gegenüber den Hydrodämpfern mit einem pneumatischen Dämpfer erzielbaren Vorteile vorliegend aufgabengemäß, und erfolgt der Einsatz eines Elastomers als Membranwerkstoff notwendigerweise, um die relative Schwingfähigkeit der beiden Dämpferplatten 1,2 gegeneinander herzustellen. Gleichzeitig muß die solcherart aufgebaute Membran jedoch auch steif genug sein, um bei den im Einsatzbereich auftretenden Innendrücken der Dämpferkammer im Idealfall nicht als Blähfeder zu wirken. Der zwischen diesen beiden einander entgegenstehenden Forderungen auftretende Konflikt, nämlich der weichen nicht-federnden Aufhängung der Membranplatte und der vergleichsweise steifen Dämpferkammerbegrenzung, wird in der aus Fig. 1 ersichtlichen Weise dadurch gelöst, daß die Membran 3 nach Art einer Rollmembran konfiguriert ist, so daß das Schwingen der Membranplatte 1 nicht zu einer Dehnung oder Stauchung des Elastomers der Membran 3 führt, sondern durch ein "rollendes" minimales Aufwärtswandern und Abwärtswandern einer im Elastomer der Membran 3 präformierten Rollfalte 12. Durch diese Maßnahme kann eine Federkomponente in der Dämpfercharakteristik praktisch vollständig ausgeschaltet werden, die auf die elastischen Eigenschaften des Membranwerkstoffs selbst zurückgeht.

Die Fig. 2 zeigt eine Weiterentwicklung des in Fig. 1 in seiner Grundstruktur dargestellten Dämpfers.

Gegenüber dem in Fig. 1 gezeigten Aufbau des Dämpfers ist der in Fig. 2 gezeigte Dämpfer zusätzlich zur Bohrung 11 mit einer Bohrung 13 versehen, die ebenfalls beidseitig offen die beschichtete Grundplatte 2,10 durchsetzt. Während sich diese Bohrung auf ihrer einen Seite in die Dämpferkammer 6 öffnet, ist sie auf ihrer außenliegenden Seite mit dem Druckstutzen einer Druckluftpumpe 14 versehen, die typischerweise einen Überdruck im Bereich von 0,4 bis 0,8 bar erzeugen kann. Gleichzeitig ist der Dämpfer membranplattenseitig luftdicht und druckfest mit einer Kappe 15 umgeben, die gemeinsam mit der Membran 3 und der außenliegenden Oberseite der Membranplatte 1 eine Kammer 16 definiert, in die hinein sich die Abstimmbohrung 11 in der Membranplatte 1 öffnet. Die Art und Weise der Durchführung des Koppelbolzens 8 durch die Haube 15 ist dabei prinzipiell so lange beliebig gestaltbar, wie sie ausreichend luftdicht ausgebildet ist. So kann die Kappe 15 aus starrem Werkstoff bestehen und der Koppelbolzen 8 die Kammerwand mit einer gleitlagerähnlichen Durchführung ausgestattet sein, kann aber auch alternativ fest mit einem flexiblen Wandbereich der Kappe 15, beispielsweise nach Art einer Wellmembran, verbunden sein.

Funktionell ermöglicht die Ausgestaltung des Dämpfers nach Fig. 2 einen auch geregelt einstellbaren Überdruck des Dämpfungsfluids Luft, so daß das Resonanzband des Dämpfers beispielsweise wechseinden Betriebsbedingungen variabel nachführbar ist.

Eine im wesentlichen gleichwirkende Alternative zu dem in Fig. 2 gezeigten Ausführungsbeispiel des Dämpfers ist in der Fig. 3 dargestellt. Bei der in Fig. 3 gezeigten Ausgestaltung werden Probleme umgangen, die gegebenenfalls durch die Koppelbolzendurchführung durch die Kappe 15 in dem in Fig. 2 gezeigten Ausführungsbeispiel auftreten können. Statt der Bohrung 11 durch die Membranplatte 1 hindurch ist bei dem in Fig. 3 gezeigten Ausführungsbeispiel eine beidseitig offene durchgehende Bohrung 17 vorgesehen, die zusätzlich zur Bohrung 13 die Gegenplatte 2 durchsetzt. Die Bohrung 17 öffnet sich, bezogen auf die Dämpferkammer 6, außenseitig in eine zweite Resonatorkammer 18, die ausschließlich aus starren Begrenzungswänden aufgebaut ist, also auch unter variablen Luftdrücken ein stets konstantes Volumen besitzt. Dadurch wird, in Verbindung mit der Dimensionierung und Konfiguration der Bohrung 17 im Dämpfer nach der Fig. 3 ein zusätzliches Resonanzsystem geschaffen, das eine sehr genaue und in Verbindung mit der Pumpe 14 variable Gestaltung des Resonanzverhaltens des Dämpfers ermöglicht.

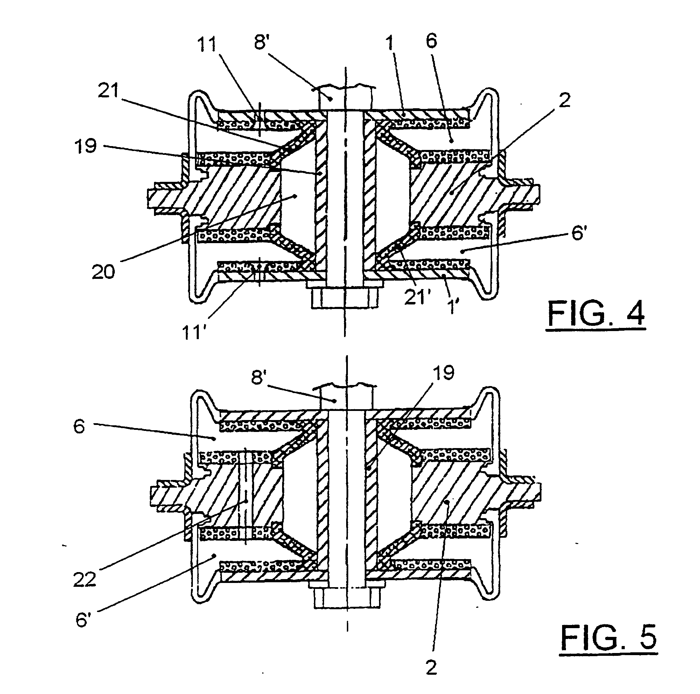

Wirksame Arbeitsquerschnitte der Platten im Größenordnungsbereich zwischen 80 mm und 100 mm reichen in aller Regel für übliche Motorlagerkonfigurationen für Antriebsaggregate von Personenkraftwagen vollkommen aus. Bei größerem Dämpfungsbedarf können die Querschnitte vergrößert werden, ohne daß dabei eine größere Bauhöhe eines Lagers erforderlich ist, das mit einem Dämpfer der in den Fig. 1 bis 3 gezeigten Art aufgebaut ist. Wenn jedoch, was insbesondere bei karosserienahen Konsolenpunkten der Fall ist, der radiale Bauraum beschränkt ist, kann eine Vergrößerung der durch den Dämpfer verfügbaren Dämpfungskraft durch einen Aufbau des Dämpfers in der in den Fig. 4 und 5 gezeigten Weise als "Duosystem" erfolgen, bei dem zwar die axiale Bauhöhe zur Verwirklichung der Leistungserhöhung geringfügig vergrößert werden muß, wofür zum Ausgleich dann jedoch keinerlei radiale Bauvolumenvergrößerung in Kauf genommen zu werden braucht.

Das in der Fig. 4 im Axialschnitt gezeigte Ausführungsbeispiel des Dämpfers der Erfindung als Duosystem entspricht in seinen wesentlichen funktionellen Merkmalen der in Fig. 1 dargestellten Grundkonfiguration des Dämpfers, wobei lediglich auf der der Dämpferkammer 6 gegenüberliegenden Seite der Grundplatte 2 eine zweite Dämpferkammer 6' vorgesehen ist. Auch die zweite Membranplatte 1' ist mit einer durchgehenden Drosselbohrung 11' versehen, die sich zur Außenseite des Dämpfers hin öffnet. Mittels einer Distanzhülse 19 sind die beiden Membranplatten 1, 1' starr miteinander verbunden. Dabei durchsetzt der Koppelbolzen 8' mit der Distanzhülse 19 die Gegenplatte 2 frei durch eine zweite zentrale Bohrung 20. Die zentrale Bohrung 20 ist so ausreichend weit bemessen, daß dem Koppelbolzen 8' auch ein freies Kippspiel sowie ein Spiel gegenüber Querversatz ermöglicht ist.

Die Dämpferkammern 6, 6' sind gegenüber der zentralen Bohrung 20 in der Grundplatte 2 mittels flexibler Membranen 21, 21' luftdicht und druckdicht abgegrenzt. Bei dem solcherart gemäß Fig. 4 symmetrisch aufgebauten Dämpfer kann also ohne ein größeres radiales Bauvolumen in Anspruch nehmen zu müssen bei einer Vergrößerung der Bauhöhe um 10 bis 15 mm eine Verdopplung der Dämpferleistung erzielt werden.

Eine weitergehende Gestaltung des Kennlinienfeldes eines nach Fig. 4 aufgebauten Dämpfers kann erforderlichenfalls selbstverständlich durch eine asymmetrische Abstimmung der Dämpferkammern 6 und 6' erfolgen.

Die Fig. 5 zeigt schließlich eine weitere Modifikation des in Verbindung mit Fig. 4 erläuterten Dämpfers. Statt der beiden Außenbelüftungen der Kammern 6, 6' über die Drosselkanäle 11, 11' ist der in Fig. 5 dargestellte Dämpfer als geschlossenes System mit einem Verbund der beiden Dämpferkammern 6, 6' mit einem beidseitig offenen durchgehenden Kanal 22 durch die Gegenplatte 2 hindurch ausgestattet, der die beiden Dämpferkammern 6, 6' unmittelbar pneumatisch miteinander verbindet.

Diese Auslegung des Dämpfers gemäß Fig. 5 erinnert prinzipiell an die gebräuchlichen Dämpfer, die in Hydrolagern eingesetzt werden. Gegenüber diesen weist der Luftdämpfer gemäß Fig. 4 jedoch ebenso wie alle anderen Luftdämpfer mit den Merkmalen der Erfindung den Vorteil auf, daß das Drosselfluid Luft im Gegensatz zu den hydraulischen Drosselfluiden zum einen keinen Körperschall überträgt und zum anderen in keiner unmittelbaren Verbindung zu einem Tragfedersystem aufweist. Bei allen Luftdämpfern gemäß der Erfindung erfolgt die Ankopplung der völlig unabhängig aufgebauten und konfigurierten Dämpfer an die Tragfeder über einen separaten Koppelbolzen (8; 8'). Das über ein hier nicht dargestelltes Auflagerblech der Tragfeder angekoppelte Auflastsystem und das über die Gegenplatte 2 angekoppelte Widerlagersystem sind also über den Dämpfer gleichzeitig in idealer Weise akustisch entkoppelt.

## Patentansprüche

1. Luftdämpfer, insbesondere für Kraftfahrzeug-Aggregatlager, mit mindestens einer elastisch verformbaren, offenen pneumatischen Arbeitskammer, zwei planparallel zueinander ausgerichteten und durch eine flexible Membran (3) relativ zueinander abstandsvariabel beweglich gehaltenen Dämpferplatten, nämlich einer Membranplatte (1) und einer Gegenplatte (2), zwischen denen und der Membran eine pneumatische Dämpfer- und Resonanzkammer (6) definiert ist, und mindestens einer die Dämpferkammer pneumatisch öffnenden, beidseitig offenen Bohrung (11), die zumindest eine der beiden Dämpferplatten (1,2) der Dämpferkammer (6) durchsetzt,
**dadurch gekennzeichnet, daß** die flexible Membran (3) als aus einem Elastomermaterial hergestellte Rollmembran ausgebildet ist und eine flächige verbundene elastische Schaumstoffschicht (9, 10) auf der in die Dämpferkammer (10) weisenden Oberfläche zumindest einer der Dämpferplatten (1,2) vorgesehen ist.

2. Luftdämpfer nach Anspruch 1,
**gekennzeichnet durch**
eine Schaumstoffschicht (9, 10) mit geschlossenen Poren.

3. Luftdämpfer nach einem der Ansprüche 1 oder 2,
**gekennzeichnet durch**
einen Abstand der beiden einander in der Dämpferkammer (6) gegenüberliegenden Oberflächen der Dämpferplatten (1,2) im Bereich von 2-5 mm zur Bedämpfung von Aggregatlagem für Personenkraftfahrzeuge.

4. Luftdämpfer nach einem der Ansprüche 1 bis 3,
**gekennzeichnet durch**
sich jeweils in die Dämpferkammer (6) hinein öffnende Bohrungen (11,13) in jeder der beiden einander gegenüberliegenden Dämpferplatten (1,2), von denen sich die in der Membranplatte (1) befindliche Bohrung (11) frei nach außen öffnet, während an die die Grundplatte (2) durchsetzende Bohrung (13) eine Druckluftpumpe (14) angeschlossen ist.

5. Luftdämpfer nach einem der Ansprüche 1 bis 4,
**gekennzeichnet durch**
eine Bohrung (11;17) in der Membranplatte (1), die sich in eine Kammer (16;18) hinein öffnet, die nach außen hin mit einer Kammerwand (15) druckfest und luftdicht verschlossen ist.

6. Luftdämpfer nach einem der Ansprüche 1 bis 5,
**gekennzeichnet durch**
eine zweite Dämpferkammer (6'), die in der Grundplatte (2) integriert und über eine zweite, die Grundplatte durchsetzende Bohrung (22) mit der Dämpferkammer (6) pneumatisch verbunden ist.

7. Luftdämpfer nach einem der Ansprüche 1 bis 6,
**gekennzeichnet durch**
zwei Membranplatten (1,1'), von denen je eine zu je einer der beiden Seiten der Grundplatte (2) **durch** eine jeweils eigene Membran (3) gehaltert sind, wobei die **dadurch** zu beiden Seiten der Grundplatte (2) gebildeten beiden Dämpferkammern (6, 6') entweder jeweils nur **durch** Bohrungen (11, 11') in den beiden Membranplatten (1,1') hindurch geöffnet, oder, entweder nur oder zusätzlich, **durch** eine Bohrung (22) miteinander kommunizierend verbunden sind, die die Grundplatte (2) beidseitig offen durchsetzt.

8. Luftdämpfer nach Anspruch 7,
**gekennzeichnet durch**
einen mit beiden Membranplatten (1,1') fest verbundenen (19) Aktuatorbolzen (8'), der eine gegen die beiden Dämpferkammern (6, 6') druckfest und luftdicht mit jeweils einer Membran (21, 21') abgedichtete zentrale Öffnung (20) in der Grundplatte frei durchsetzt.

## Claims

1. A pneumatic shock-absorber, particularly for motor vehicle unit bearings, comprising at least one elastically deformable open pneumatic working chamber, two shock-absorber plates, namely a diaphragm plate (1) and a co-acting plate (2), which are aligned to be plane-parallel to one another and are held movably with variable relative spacing from one another by means of a flexible diaphragm (3), and between which and the diaphragm there is defined a pneumatic shock-absorber and resonant chamber (6), and at least one bore (11) which is open on both sides, opens the shock-absorber chamber pneumatically, and extends through at least one of the two shock-absorber plates (1, 2) of the shock-absorber chamber (6), **characterised in that** the flexible diaphragm (3) is constructed in the form of a rolled diaphragm made from an elastomeric material and a superficially connected elastic foam material (9, 10) layer is provided on that surface of at least one of the shock-absorber plates (1, 2) which points into the shock-absorber chamber (10).

2. A pneumatic shock-absorber according to claim 1, **characterised by** a foam material layer (9, 10) with closed pores.

3. A pneumatic shock-absorber according to claim 1 or 2, **characterised by** a space in the range from 2 to 5 mm between the two surfaces of the shock-absorber plates (1, 2) situated opposite one another in the shock-absorber chamber (6), for absorbing shocks on unit bearings in private motor vehicles.

4. A pneumatic shock-absorber according to any one of claims 1 to 3, **characterised by** bores (11, 13) in each of the two opposite shock-absorber plates (1, 2), said bores each opening into the shock-absorber chamber (6), the bore (11) situated in the diaphragm plate (1) opening freely to the exterior while a compressed air pump (14) is connected to the bore (14) extending through the base plate (2).

5. A pneumatic shock-absorber according to any one of claims 1 to 4, **characterised by** a bore (11; 17) in the diaphragm plate (1), said bore opening into a chamber (16; 18) which is sealed off from the exterior by a chamber wall (15) so as to be pressure-tight and air-tight.

6. A pneumatic shock-absorber according to any one of claims 1 to 5, **characterised by** a second shock-absorber chamber (6') which is integrated in the base plate (2) and is pneumatically connected to the shock-absorber chamber (6) via a second bore (22) extending through the base plate.

7. A pneumatic shock-absorber according to any one of claims 1 to 6, **characterised by** two diaphragm plates (1, 1'), each of which is mounted on one of the two sides of the base plate (2) by its own diaphragm (3), while the two shock-absorber chambers (6, 6') formed as a result on both sides of the base plate (2) are either each opened only by bores (11, 11') in the two diaphragm plates (1, 1') or are either only or additionally connected so as to communicate with one another through a bore (22) which extends through the base plate (2) so as to be open on both sides.

8. A pneumatic shock-absorber according to claim 7, **characterised by** an actuator bolt (8') which is rigidly connected (19) to both diaphragm plates (1, 1') and which extends freely through a central opening (20) in the base plate, said central opening being sealed off from the two shock-absorber chambers (6, 6') by a diaphragm (21, 21') in each case so as to be pressure-tight and air-tight.

## Revendications

1. Amortisseur à air, en particulier pour un palier de groupe pour véhicule automobile, comprenant au moins une chambre de travail pneumatique ouverte, déformable élastiquement, deux plaques d'amortisseur orientées l'une par rapport à l'autre de façon parallèle et plane et maintenues mobiles l'une par rapport à l'autre avec une variation de leur espacement au moyen d'une membrane (3) flexible, précisément une plaque de membrane (1) et une contre-plaque (2), entre lesquelles et la membrane est définie une chambre d'amortissement et de résonance (6) pneumatique, et au moins un perçage (11) ouvert des deux côtés, ouvrant pneumatiquement la chambre d'amortisseur, qui traverse au moins l'une des deux plaques d'amortisseur (1, 2) de la chambre d'amortisseur (6), **caractérisé en ce que** la membrane flexible (3) est réalisée sous la forme de membrane déroulante, fabriquée en un matériau élastomère, et une couche en matériau alvéolaire (9, 10) élastique, reliée sur la surface, est prévue sur la surface, tournée dans la chambre d'amortisseur (10), au moins d'une des plaques d'amortisseur (1, 2).

2. Amortisseur à air selon la revendication 1, **caractérisé par** une couche en matériau alvéolaire (9, 10) ayant des pores fermés.

3. Amortisseur à air selon l'une des revendications 1 à 2, **caractérisé par** un espacement des deux surfaces, opposées l'une à l'autre dans la chambre d'amortisseur (6), des plaques d'amortisseur (1, 2) dans la plage de 2 à 5 mm, pour l'amortissement de paliers de groupe pour des véhicules automobiles de type voiture particulière.

4. Amortisseur à air selon l'une des revendications 1 à 3, **caractérisé par** des perçages (11, 13) débouchant chacun dans la chambre d'amortisseur (6), dans chacune des deux plaques d'amortisseur (1, 2) opposées l'une à l'autre, perçages dont le perçage (11) se trouvant dans la plaque de membrane (1) débouche librement vers l'extérieur, tandis qu'au perçage (13), traversant la plaque de base (2), est raccordée une pompe à air comprimé (14)

5. Amortisseur à air selon l'une des revendications 1 à 4, **caractérisé par** un perçage (11 ; 17) dans la plaque de membrane (1), qui débouche dans une chambre (16 ; 18) fermée vers l'extérieur de façon résistante à la pression et étanche à l'air par une paroi de chambre (15).

6. Amortisseur à air selon l'une des revendications 1 à 5, **caractérisé par** une deuxième chambre d'amortisseur (6'), intégrée dans la plaque de base (2) et reliée pneumatiquement à la chambre d'amortisseur (6) par un deuxième perçage (22) traversant la plaque de base.

7. Amortisseur à air selon l'une des revendications 1 à 6, **caractérisé par** deux plaques de membrane (1, 1'), maintenues chacune en l'une des deux faces de la plaque de base (2), chaque fois par une membrane (3) propre, les deux chambres d'amortisseur (6, 6'), formées de ce fait des deux côtés de la plaque de base (2), étant soit ouvertes chaque fois uniquement par des perçages (11, 11') ménagées dans les deux plaques de base (1, 1'), soit uniquement ou à titre supplémentaire reliés en communication entre elles par un perçage (22) qui traverse la plaque de base (2) en étant ouvert sur les deux faces.

8. Amortisseur à air selon la revendication 7, **caractérisé par** un boulon d'actionneur (8'), relié rigidement (19) aux deux plaques de membrane (1, 1'), boulon d'actionneur traversant librement une ouverture centrale (20) ménagée dans la plaque de base, de façon résistante à la pression et étanche à l'air par rapport aux deux chambres d'amortisseur (6, 6') et isolée hermétiquement chaque fois à l'aide d'une membrane (21, 21').
